# EUROPEAN PATENT APPLICATION

(11) **EP 4 822 958 A1**
(43) Date of publication of application: **14.10.2026**
(21) Application number: 26171121.2
(22) Date of filing: 08.04.2026
(51) Int. Cl.: H02K 7/09, B63H 1/16, F16C 32/04, H02K 7/14

(54) **ELECTRIC PROPULSION SYSTEM WITH PASSIVE-ACTIVE MAGNETIC SUPPORT**

(30) Priority: 10.04.2025 IT 202500007866
(71) Applicant: Politecnico di Torino, 10129 Torino (IT)
(72) Inventor: GLORIOSO, Mattia, Torino (IT); ORLANDO, Vincenzo, Torino (IT); BONFANTI, Mauro, Torino (IT); CASALONE, Pietro, Torino (IT); NIOSI, Francesco, Torino (IT); DELL'EDERA, Oronzo, Torino (IT)
(74) Representative: Bruni, Giovanni

(57) **Abstract**

*Electric propulsion system (10) equipped with an electric motor (20) having:*
*- a rotor (22) equipped with one or more permanent magnets (24) inside it,*
*- a stator (26) equipped with one or more motor electromagnets, and*
*- a casing (28), substantially cylindrical and radially external to the rotor (22) which integrates the stator (26) inside it,*
*the propulsion system (10) having no drive shaft and having:*
*- a first system (30) of passive magnetic levitation, and*
*- a second system (40) of active magnetic levitation.*

## Description

### Technical field of the invention

The present invention relates to an electric propulsion system provided with a passive-active magnetic support system. The subject propulsion system is particularly suitable for applications in marine engines.

### Background Art

As is known, the field of vehicle propulsion is undergoing a transition from fossil-fuel engines to electric motors.

In fact, the traditional diesel propulsion, for example, is a significant source of emissions of carbon dioxide, of nitrogen oxides, of sulfur oxides, and of particulate matter, which negatively contribute to climate change and air pollution. The use of other fossil fuels, such as gasoline or gas, has similar drawbacks. The use of electric propulsion, instead, allows for the reduction of harmful emissions and the reduction of environmental impact.

Considering as an example the marine environment, the most conventional marine propulsion systems include a propeller, a shaft, a stern bearing, and a thrust bearing. Various technologies are used to support propeller rotation in traditional marine propulsion systems:
- rolling bearings. Roll-bearings comprise an outer ring and an inner ring mutually concentric, between which are interposed rolling elements (balls or rollers) designed to support predominantly radial loads. The inner ring is fixed to a propeller support element, whereas the outer ring is positioned in the stationary duct containing the motion transmission element. Although rolling bearings are well established in the state of the art, they have some obvious disadvantages: low reliability in salt water and excessive bearing wear; bearing friction may cause the rotor to fail to reach the desired speed; ball bearings cause high vibration and noise; seals are mandatory as these types of bearings cannot operate in water, but they also increase mechanical friction when the propeller applies the maximum thrust;
- oil-lubricated bearings: by using this system, the propeller shaft is flooded with lubricant to minimize friction. A set of rotating lip seals is placed at both ends of the stationary duct to prevent lubricant leakage and water inlet. The disadvantages of oil-lubricated bearings include complexity, high-precision manufacturing, and installation difficulties, as well as the requirement for a lubricating oil circuit. Finally, some international standards (United States, European Union) prohibit the navigation of vessels provided with oil-lubricated bearings in certain protected waters;
- water-lubricated bearings: these consist of a shaped casing with some passages for water flow. The pressurized water supports the load, generating a direct reaction on the propeller due to the water gap between it and the duct. Despite some advantages, the use of water-lubricated bearings could affect the system's reliability and longevity, as sediments in the water cause bearing wear. Furthermore, when a ship operates at sea, the shaft is subjected to high speeds, resulting in poor lubrication, decreasing load capacity, lowering stability, and increasing friction. Finally, the load capacity and life of water-lubricated bearings are lower than those lubricated with oil.

Therefore, the use of traditional electric propulsion also presents some drawbacks:
- maintenance and reliability: conventional propulsion systems require frequent maintenance due to the wear of mechanical components, such as bearings, seals, and lubrication systems;
- mechanical efficiency: the presence of drive shafts and gears in traditional systems results in energy losses due to mechanical friction;
- on board space: particularly in marine environments, conventional propulsion systems take up space on board due to the need for housing for drive shafts and lubrication systems;
- noise and vibration: particularly in marine environments, the vibrations and noise generated by traditional propulsion systems can negatively impact on board comfort and the marine environment itself.

Therefore, there is a need to design an electric propulsion system that eliminates, or at least minimizes, the aforementioned drawbacks related to efficiency losses, reliability, and noise.

### Summary of the Invention

In order to substantially solve the technical problems highlighted above, one purpose of the present invention is to define an electric propulsion system, which is particularly but not exclusively suitable for marine environments, provided with a propeller integrated into the rotor and a magnetic levitation system for the rotor itself, permitting to eliminate motion transmission elements, resulting in improved reliability, mechanical efficiency, and reduces the space required. The absence of drive shafts, gears, and support bearings significantly reduces sources of noise and vibration.

Therefore, according to the present invention, a passive-active magnetic support system is provided having the characteristics set forth in the independent claim attached to this description.

Further preferred and/or particularly advantageous embodiments of the invention are described according to the characteristics set forth in the attached dependent claims.

### Brief Description of the Drawings

The invention will now be described with reference to the accompanying drawings, which illustrate some non-limiting examples of its implementation, in which:
- Figure 1 is a simplified exploded diagram of a side view of an electric propulsion system provided with a passive-active magnetic support system, according to a preferred embodiment of the present invention;
- Figure 2 is an exploded axonometric exploded view of the propulsion system of Figure 1; and
- Figure 3 is a detail of the propulsion system of Figure 1.

### Detailed Description

By way of a not limitative example, the present invention will now be described with reference to the aforementioned figures.

The description of the electric propulsion system according to the present invention will explicitly refer to marine propulsion, as the marine environment is undoubtedly more hostile and aggressive than land or air environments. However, the present invention, as will be evident from the following description, is not limited to marine applications but can also be used on any other transport means, and therefore the propulsion system can exert its thrust on both water and air.

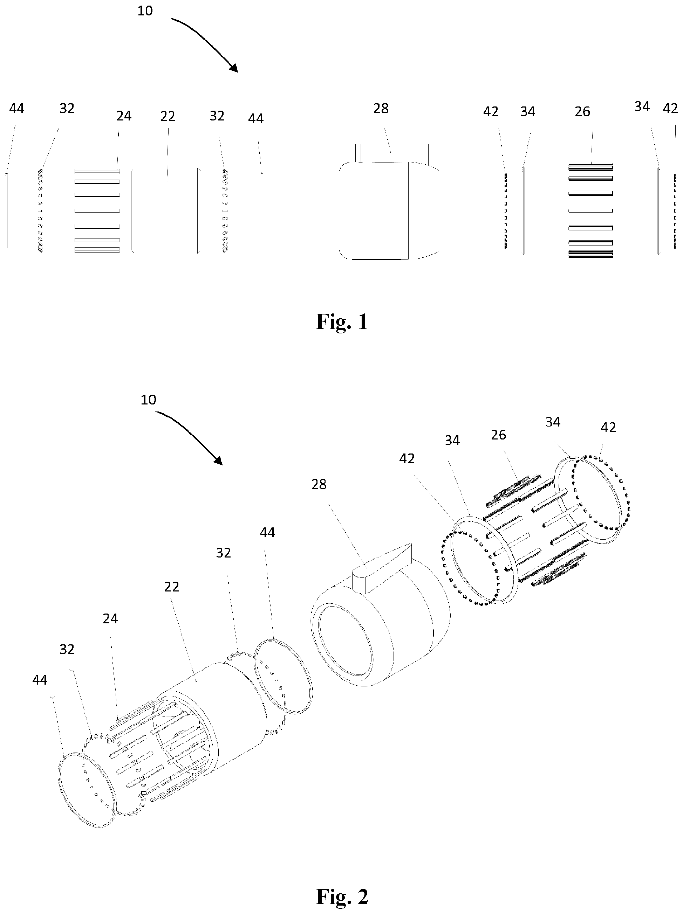

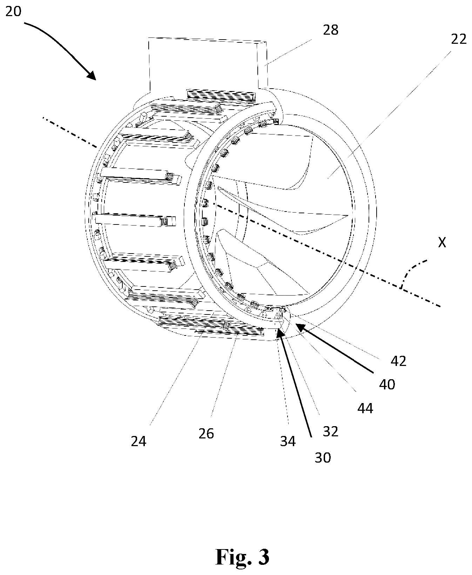

With reference to Figures 1 through 3, an electric propulsion system 10 according to the present invention, which is particularly suitable for marine use, has no transmission shaft and comprises:
- an electric motor 20,
- a first system 30 of passive magnetic levitation, and
- a second system 40 of active magnetic levitation.

As will be better clarified from the following description, the electric propulsion system 10, according to the present invention, does not require a drive shaft, mechanical bearings, seals, or oil lubrication systems, thus optimizing mechanical efficiency and reducing wear.

The electric motor is servo-driven by the rotation of the propeller and in turn it includes:
- a propeller-shaped rotor 22, provided internally with one or more permanent magnets 24,
- a stator 26 provided with one or more motor electromagnets, and
- a substantially cylindrical casing 28, radially external to the rotor 22, which integrates the stator 26.

The design of the electric motor eliminates the need for a mechanical commutator and brushes, reducing wear and maintenance requirements. The stator 26 being integrated into the interior of the casing 28 ensures that the windings and electrical cables are insulated from sea water. Likewise, the permanent magnets 24 of the rotor 22, being integrated within the propeller-shaped rotor, are also protected from sea water.

The first passive magnetic levitation system 30 is a passive magnetic support, comprising:
- one or more groups of permanent magnets 32, preferably arranged on a conical surface or arranged obliquely with respect to the rotation axis, integrated into the rotor 22, and
- one or more conductive rings 34 (or, alternatively, also formed by one or more permanent magnets), preferably arranged on a conical surface or arranged obliquely with respect to an X-axis of rotation of the motor, integrated into the casing 28, so that each group of permanent magnets 32 faces a respective conductive ring 34 or group of permanent magnets. In the embodiment illustrated in the Figures, which is an example and not a limitation, both the permanent magnets 32 and the conductive rings 34 are two in number, each pair being arranged near the respective ends of the rotor 22 and the casing 28.

This first system 30 of passive magnetic levitation therefore keeps the rotor 22 of the electric propulsion system 10 in line, without the need for any support and therefore any mechanical contact.

The thrust of the propeller, or of the propeller-shaped rotor 22, is therefore supported by the first passive magnetic levitation system 30. This first system 30, in the variant featuring the conductive rings 34, is based on the principle of eddy currents. During the rotation of the propeller, the conical permanent magnets 32 generate a repulsive force that opposes the thrust of the propeller itself. This repulsive effect is a consequence of the principle of eddy currents: when a series of permanent magnets moves at a predetermined speed near a conductive plate (in the example illustrated, the conical conductive rings 34), a current is induced in the plate, creating a magnetic field that produces a repulsive force. This system is completely passive and requires no power to operate. The conical configuration allows for both axial and radial support of the propeller, improving stability.

The second system 40 of active magnetic levitation is used for the active and precise control of the position of the propelled-shaped rotor during maneuvers. This second system 40 comprises one or more electromagnets 42, integrated into the casing 28, coupled to crowns 44 of ferromagnetic material or to groups of permanent magnets, integrated into the rotor 22, so that each electromagnet 42 faces a respective crown 44 or groups of permanent magnets. In the embodiment, illustrated in the Figures by way of example and not as a limitation, both the electromagnets 42 and the crowns 44 are two in number, each pair of them being arranged near the respective ends of the casing 28 and the rotor 22. The electromagnets 42 are powered by a control current that induces a magnetic field, generating an attractive force. Suitable position sensors measure the gap between the propeller and the duct, allowing an electric control unit propulsion system 10 to adjust the current in the electromagnets 42 to control the axial position of the propeller, avoiding misalignment of the rotor 22. This second active system 40 ensures greater precision and reliability, improving the overall performance of the propulsion system 10.

The present invention differs from prior art solutions, particularly those applied in the marine environment, through a series of technical innovations:
- no mechanical contact: the magnetic levitation system, with a conical support of permanent magnets (passive system) and electromagnets (active system), keeps the rotor's position without mechanical contact, eliminating the need for mechanical bearings;
- no drive shaft and bearings: the absence of a drive shaft and mechanical bearings significantly reduce wear and the need for maintenance;
- winding protection: the stator is integrated into the internal part of the duct, isolating the windings and electrical cables from sea water, improving the system's durability and avoiding the use of sliding sealing systems;
- passive and active magnetic levitation. The combined use of passive and active magnetic levitation allows for precise control of the rotor's position, increasing the system's stability and responsiveness while reducing the energy required for correct positioning.

From a performance standpoint, the present invention offers:
- increased efficiency: the elimination of mechanical friction and the reduction of energy losses through the active and passive magnetic levitation system increase the overall efficiency of the propulsion system;
- reduced noise and vibration: the lack of mechanical contact and magnetic levitation significantly reduce noise and vibration during operation;
- increased life of the propulsion system: the reduction of mechanical wear and the protection of electrical elements increase the system's operational life, decreasing the frequency of maintenance;
- improved operational stability: the active control of the rotor position allows for greater operational stability even in maneuvering or under turbulent conditions, improving dynamic performances.

No less significant are the economic benefits achieved by the present invention:
- reduced maintenance costs: the absence of mechanical components subject to wear, such as bearings and seals, significantly reduces maintenance costs and the need for component replacement;
- fewer repairs: the increase of system reliability and durability reduces the frequency of repairs, contributing to a reduction in long-term operating costs;
- reduced costs related to greater energy efficiency. The increase of system efficiency leads to reduced energy consumption, lowering operating costs.

Finally, the use of a technology that does not require oil lubricants allows compliance with international environmental standards, avoiding potential operational restrictions.

Numerical analyses and simulations have confirmed the validity of the propulsion system solution according to the present invention. The numerical results provide a solid basis for future practical implementation. A detailed description of the activities performed is provided below:
- computational fluid dynamics simulations. These were performed to evaluate the hydrodynamic efficiency of the propeller design and optimize its shape to reduce water resistance and improve propulsive efficiency. The results obtained allowed the optimization of the propeller profile to minimize resistance and optimize efficiency, achieving a significant reduction in turbulence and improved water flow through the duct;
- magnetic simulations. These were performed to verify the effectiveness of the passive-active magnetic levitation systems and optimize the design to ensure stability and reduce energy consumption. The results obtained allowed to keep the energy consumption of the active magnetic levitation system within a small percentage of the total power required to drive the motor. This achievement is essential to ensure that the system is energy efficient and does not compromise the overall performance of the propulsion system. The results obtained also allowed to optimize the arrangement of the magnet of the passive and active levitation systems to ensure axial and radial stability without mechanical contact.

Ultimately, the present invention achieves the following main advantages:
- reduced emissions and a sustainable environmental impact thanks to the use of an electric propulsion system;
- increased reliability and minimized maintenance costs thanks to the implementation of magnetic levitation technology, which eliminates the need for mechanical contact, significantly reducing component wear and maintenance requirements;
- improved overall mechanical efficiency of the system due to the absence of transmission elements such as shafts and gears, resulting in reduced mechanical friction;
- reduced noise and vibration thanks to magnetic levitation and to the absence of mechanical contact, allowing for quiet operation with minimal vibration. This improves passenger comfort and reduces the acoustic impact, particularly in marine environments;
- also in the marine environment, reduced on board space requirements thanks to the compact, transmission-free system configuration elements.

In addition to the embodiment of the invention, as described above, it should be understood that numerous other variations exist. It should also be understood that these embodiments are merely exemplary and do not limit the scope of the invention, its applications, or its possible configurations. Conversely, while the above description allows the skilled craftsman to implement the present invention according to at least one exemplary embodiment, it should be understood that many variations of the described components are possible without departing from the scope of the invention, as defined in the appended claims, which are interpreted literally and/or according to their legal equivalents.

## Claims

1. Electric propulsion system (10) provided with an electric motor (20) comprising:
- a rotor (22) provided with one or more permanent magnets (24) inside it,
- a stator (26) provided with one or more motor electromagnets, and
- a casing (28), substantially cylindrical and radially outer to the rotor (22) which integrates the stator (26) inside it,
the propulsion system (10) being **characterized by** the fact that it has no transmission shaft and by the fact that it comprises:
- a first system (30) of passive magnetic levitation, and
- a second system (40) of active magnetic levitation,
wherein the second active magnetic levitation system (40) comprises one or more electromagnets (42), integrated in the casing (28), coupled to crowns (44) of ferromagnetic material, integrated in the rotor (22), so that each electromagnet (42) faces a respective crown (44).

2. Propulsion system (10) according to claim 1, wherein the first passive magnetic levitation system (30) comprises one or more permanent magnets (32), integrated in the rotor (22), and one or more conductive rings (34), integrated in the casing (28), so that each permanent magnet (32) faces a respective conductive ring (34).

3. Propulsion system (10) according to claim 2, wherein both the permanent magnets (32) and the conductive rings (34) are arranged on a conical surface or arranged obliquely with respect to an axis (X) of rotation of the motor.

4. Propulsion system (10) according to claim 2 or 3, wherein both the permanent magnets (32) and the conductive rings (34) are two in number, each pair of them being arranged in proximity to the respective ends of the rotor (22) and the casing (28).

5. Propulsion system (10) according to claim 1, wherein both the electromagnets (42) and the crowns (44) are two in number, each pair of them being arranged in proximity to the respective ends of the casing (28) and the rotor (22).

6. Propulsion system (10) according to claim 1 or 5, wherein the electromagnets (42) are powered by a control current that induces a magnetic field, generating an attractive force.

7. Propulsion system (10) according to anyone of the preceding claims, wherein the rotor (22) is shaped like a propeller, the propulsion system (10) being suitable for marine use.
